# FASCICULE DE BREVET EUROPEEN

(11) **EP 2 444 747 B1**
(45) Date de publication et mention de la délivrance du brevet: **06.04.2016**
(21) Numéro de dépôt: 11185855.1
(22) Date de dépôt: 19.10.2011
(51) Int. Cl.: F24D 11/02, F24D 17/02

(54) **Installation de production d'eau chaude sanitaire pour habitation collective et procédé de mise en oeuvre d'une telle installation**
Anlage zur Erzeugung von sanitärem Warmwasser für Mehrfamilienhaus, und Verfahren zur Steuerung einer solchen Anlage
Device for producing domestic hot water for an apartment block and method for controlling such a device

(30) Priorité: 25.10.2010 FR 1058753; 11.04.2011 FR 1153145
(43) Date de publication de la demande: 25.04.2012
(73) Titulaire: Atlantic Climatisation et Ventilation, 69330 Meyzieu (FR)
(72) Inventeur: Merlet, Christian, 85140 Chauche (FR); Demia, Laurent, 01120 Montluel (FR); Chanut, Guillaume, 42800 Rive de Gier (FR)
(74) Mandataire: Petit, Maxime

(56) Documents cités:
- DE-A1- 3 108 729
- DE-A1- 19 614 913
- DE-U1-202004 008 792
- FR-A1- 2 926 626

## Description

La présente invention concerne une installation de production d'eau chaude sanitaire pour habitation collective.

Il est connu de EP-A-1 847 783 une installation de production d'eau chaude sanitaire pour une habitation collective comprenant une pluralité de logements individuels. L'installation comporte un réseau d'extraction individuel associé à chacun des logements individuels. Chaque réseau d'extraction individuel est muni d'un ventilateur d'extraction individuel pour extraire de l'air depuis le logement individuel associé et pour amener l'air extrait dans un dispositif de pompe à chaleur afin de chauffer du fluide à chauffer contenu dans un réservoir de stockage disposé dans le logement individuel. Les réseaux d'extraction d'air individuels débouchent dans un réseau d'extraction d'air commun aux différents logements individuels.

Dans ce type d'installation, en cas de défaillance d'un des ventilateurs, il existe un risque de pollution du logement individuel associé par l'air extrait d'autres logements. En outre, pour éviter cet inconvénient, les normes sécuritaires en vigueur imposent l'utilisation, dans ce type d'installation, de cartouches pare-flammes ou coupe-feu et/ou de clapets anti-retours pour éviter la propagation d'incendies. Or, ces cartouches et/ou clapets augmentent le coût de l'installation et nécessitent une maintenance régulière nécessitant un accès à chaque logement.

De plus, dans ce type d'installation, certains ventilateurs d'extraction, associés à des logements correspondants à une perte de charge plus importante pour extraire l'air hors du réseau d'extraction, doivent fournir une énergie plus importante que d'autres, ce qui implique notamment une facture énergétique et une nuisance sonore plus importantes d'un appartement par rapport à un autre.

Il a été proposé, pour résoudre ces problèmes, une installation de ventilation décrite dans la demande FR-A-2 926 626.

Cette installation de production d'eau chaude sanitaire pour une habitation collective comprenant une pluralité de logements individuels, comporte tout d'abord un réseau d'extraction individuel associé à chacun des logements individuels, dans lequel l'air extrait est amené dans un dispositif de pompe à chaleur pour chauffer de l'eau à chauffer contenue dans un réservoir de stockage disposé dans le logement individuel. L'installation comporte également un réseau d'extraction d'air commun aux différents logements individuels, dans lequel débouchent les réseaux d'extraction individuels, en aval des chauffe-eau, le réseau d'extraction d'air commun étant muni d'un ventilateur d'extraction d'air commun mettant en mouvement l'air présent dans tous les réseaux précités.

Ainsi, selon ce document FR-A-2 926 626, le débit d'air extrait dans chaque logement est assuré par le seul ventilateur commun. Ce type d'installation présente l'intérêt d'avoir le minimum d'équipement dans les logements et d'assurer qu'un logement individuel ne peut pas être pollué par l'air extrait d'un autre logement individuel.

Cependant, dans ce type d'installation, la dépression au niveau de chaque logement, et donc le débit d'air extrait depuis chaque logement, dépend de la perte de charge correspondante par rapport au ventilateur d'air commun. Par conséquent, le débit d'air extrait n'est pas identique dans tous les logements individuels, et le fonctionnement des différentes pompes à chaleur diffère entre les logements même si ces derniers sont de même taille et sont censés avoir le même niveau de ventilation.

Le but de la présente invention est de fournir une installation de production d'eau chaude sanitaire pour une habitation collective comprenant une pluralité de logements individuels, ne présentant pas les inconvénients précités.

A cette fin, la présente invention propose une installation de production d'eau chaude sanitaire pour une habitation collective comprenant une pluralité de logements individuels, l'installation comportant :
- un réseau d'extraction individuel associé à chacun des logements individuels, chaque réseau d'extraction individuel étant muni d'un ventilateur d'extraction individuel pour extraire de l'air depuis le logement individuel associé et pour amener l'air extrait dans des moyens d'échange de chaleur avec de l'eau à chauffer contenu dans un réservoir de stockage d'un chauffe-eau disposé dans le logement individuel,
- un réseau d'extraction d'air commun aux différents logements individuels, dans lequel débouchent les réseaux d'extraction individuels, en aval des chauffe-eau, le réseau d'extraction d'air commun étant muni d'un ventilateur d'extraction d'air commun.

Suivant des modes de réalisation préférés, l'invention comprend une ou plusieurs des caractéristiques suivantes :
- les moyens d'échange de chaleur comprennent un circuit de fluide frigorigène entre un évaporateur, où l'air extrait d'un logement individuel échange de la chaleur avec le fluide frigorigène, et un condenseur où le fluide frigorigène échange de la chaleur avec l'eau à chauffer ;
- les moyens d'échange de chaleur comprennent également un compresseur en aval de l'évaporateur et en amont du condenseur et un détendeur en aval du condenseur et en amont de l'évaporateur ;
- le condenseur est dans le réservoir de stockage ou en contact avec une paroi externe du réservoir de stockage ;
- les ventilateurs d'extraction d'air individuels fonctionnent à pression sensiblement constante ou à pression croissante avec le débit d'air ;
- l'installation comprend au moins un capteur de pression adapté à mesurer la pression dans un réseau d'extraction individuel, le ventilateur d'extraction d'air individuel associé au réseau d'extraction individuel étant régulé en fonction de la pression mesurée par le capteur de pression, le capteur de pression étant de préférence adapté à mesurer la pression en amont d'un filtre prévu pour empêcher l'encrassement de l'évaporateur et en aval de toute bouche d'aspiration du réseau d'extraction individuel ;
- au moins un ventilateur d'extraction d'air individuel est régulé selon une loi de régulation prédéfinie permettant d'obtenir une pression fournie par le ventilateur sensiblement constante, la consigne du ventilateur étant augmentée avec le temps pour augmenter la pression fournie par le ventilateur ;
- le ventilateur d'extraction d'air commun est régulé à pression constante ou croissante avec le débit, en fonction de la pression au niveau du ventilateur commun ;
- le ventilateur d'extraction d'air commun est régulé en fonction d'une pression mesurée dans le réseau d'extraction d'air commun, de préférence au point du réseau d'extraction d'air commun correspondant à la plus grande perte de charge par rapport au ventilateur d'air commun ;
- la pression mesurée dans le réseau d'extraction d'air commun est mesurée au moyen d'un capteur de pression binaire, notamment un pressostat, dont la prise de pression est disposée dans le réseau d'extraction d'air commun ; et
- le ventilateur d'extraction d'air commun est régulé en fonction du signal de sortie d'une pluralité de capteurs binaires de pression câblés en série les uns avec les autres.

L'invention se rapporte également à un procédé de mise en oeuvre d'une installation telle qu'elle vient d'être décrite dans toutes ses combinaisons, comprenant les étapes de :
- mise en marche du ventilateur d'extraction d'air commun ;
- détermination d'une dépression inférieure à une valeur de seuil prédéterminée dans un réseau d'extraction individuel ;
- mise en marche du ventilateur d'extraction d'air individuel correspondant audit réseau d'extraction individuel pour assurer une dépression supérieure à la valeur de seuil prédéterminée.

De préférence, la détermination de la dépression est réalisée au moyen dudit capteur de pression.

De manière préférée, un défaut de l'installation, notamment un colmatage d'un filtre de l'installation, est déterminé lorsque :
- le ventilateur d'extraction d'air individuel fonctionne en continu depuis un temps supérieur à une valeur de seuil prédéterminée, et/ou
- le ventilateur d'extraction d'air individuel fonctionne à un niveau de puissance supérieur à une valeur de seuil prédéterminée.

D'autres caractéristiques et avantages de l'invention apparaîtront à la lecture de la description qui suit de modes de réalisation préférés de l'invention, donnée à titre d'exemple et en référence au dessin annexé.

La figure 1 représente schématiquement une installation de production d'eau chaude sanitaire pour une habitation collective.

La figure 2 représente schématiquement un détail de la figure 1.

La figure 3 représente schématiquement un détail de la figure 2.

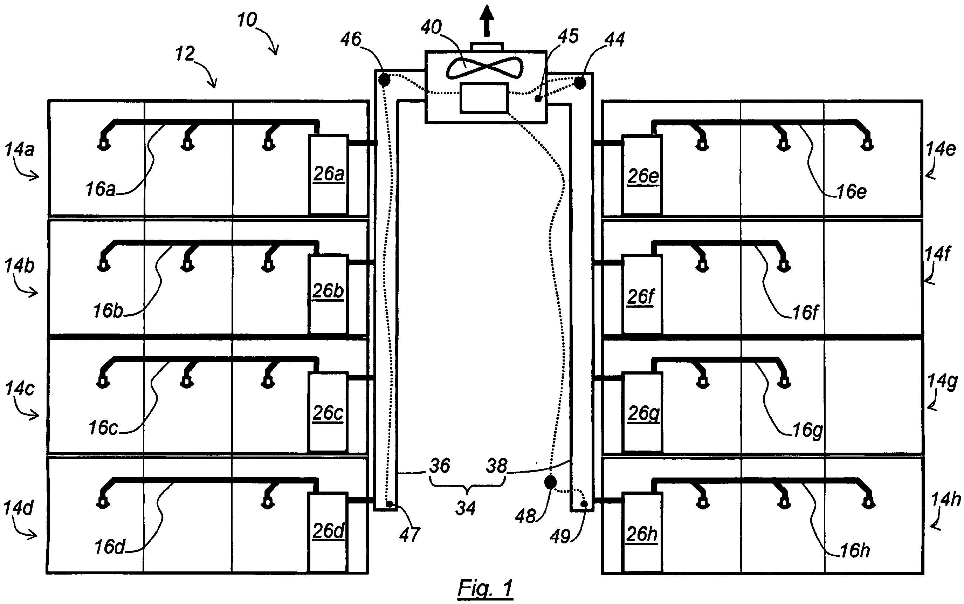

La figure 1 représente schématique une installation de production d'eau chaude sanitaire 10, pour une habitation collective 12 comprenant une pluralité de logements individuels 14a-14h.

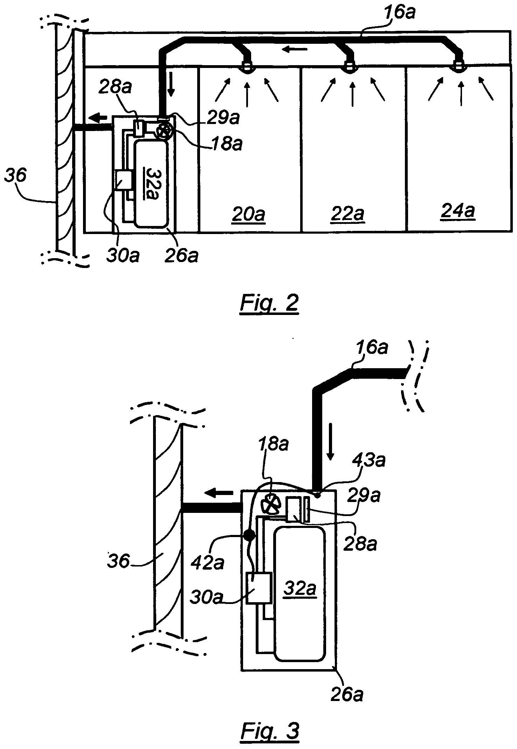

L'installation 10 comporte notamment un réseau d'extraction individuel 16a-16h associé à chacun des logements individuels 14a-14h. Par la suite, on ne décrit qu'un seul réseau d'extraction individuel 16a, en regard de la figure 2, les autres réseaux d'extraction individuels étant identiques, à l'exception éventuelle des bouches d'aspiration mises en oeuvre.

Le réseau d'extraction individuel 16a est muni d'un ventilateur 18a pour extraire de l'air depuis le logement individuel 14a associé. L'air extrait depuis une pluralité de pièces 20a, 22a, 24a est amené grâce au ventilateur 18a dans un chauffe-eau 26a adapté à récupérer des calories de l'air extrait pour chauffer de l'eau à chauffer. Ici, le ventilateur 18a est disposé à l'intérieur du chauffe-eau 26a. Le chauffe-eau 26a est un chauffe-eau thermodynamique, c'est-à-dire qu'il fonctionne sur le principe de la pompe à chaleur. L'air extrait au moyen du ventilateur 18a échange des calories avec un fluide frigorigène au niveau d'un évaporateur 28a, après être passé dans un filtre 29a destiné à empêcher un encrassement rapide de l'évaporateur. Il est à noter que le ventilateur 18a peut être disposé en amont de l'évaporateur 28a, comme cela est représenté à la figure 2, ou en aval de cet évaporateur, comme cela est représenté à la figure 3.

Un compresseur 30a met le fluide frigorigène en mouvement dans un circuit thermodynamique. Le compresseur peut également permettre de comprimer et d'augmenter la température du fluide frigorigène en sortie de l'évaporateur. Le fluide frigorigène pénètre ensuite dans un condenseur où il échange des calories avec l'eau à chauffer, contenue dans un réservoir de stockage 32a. En l'espèce, pour maximiser les échanges de calories entre le fluide frigorigène et l'eau à chauffer, le condenseur est plongé dans le réservoir de stockage d'eau à chauffer 32a. En variante, le condenseur peut être enroulé autour du réservoir de stockage d'eau à chauffer 32a.

Le fluide frigorigène est ensuite conduit dans un détendeur, avant de retourner dans l'évaporateur.

L'installation 10 de la figure 1 comporte encore un réseau d'extraction d'air 34 commun aux différents logements individuels 14a-14g. En l'espèce, ce réseau d'extraction d'air commun 34 comporte deux branches 36, 38 dans lesquelles débouchent les réseaux d'extraction individuels 16a-16g, en aval des chauffe-eau 26a-26h.

Le réseau d'extraction d'air commun 34 est en outre muni d'un ventilateur d'extraction d'air commun 40.

Il est à noter de la figure 1 que la structure des réseaux d'extraction d'air individuels 16a-16h peut être différente. Notamment, ces réseaux d'extraction d'air individuels 16a-16h peuvent ne pas extraire de l'air d'un même nombre de pièces ou locaux des logements individuels 14a-14h auxquels ils sont associés. Ces réseaux d'extraction d'air individuels 16a-16h peuvent également déboucher dans les pièces ou locaux de différentes façons :
- à travers une bouche hygroréglable ;
- à travers une bouche à débit commandé ;
- à travers une bouche à débit variable, notamment en fonction de la pollution de l'air dans la pièce ou le local ;
- à travers un simple trou, sans bouche de régulation du débit d'air extrait.

De préférence, les ventilateurs d'extraction d'air individuels 18a fonctionnent à pression sensiblement constante ou à pression croissante avec le débit d'air. Par pression sensiblement constante, on entend une pression qui varie de moins de 10 %, comme cela peut par exemple être le cas pour un ventilateur d'extraction d'air individuel 18a fonctionnant sans régulation mais ayant une courbe spécifique de débit-pression sensiblement constante sur la plage de débits sur laquelle il fonctionne.

Il est à noter ici que dans la présente description le terme « pression » est utilisé pour décrire une dépression.

En variante, ou de manière complémentaire, les ventilateurs d'extraction d'air individuels fonctionnent en modulation de pression. Ainsi, comme cela est représenté à la figure 3, il peut être prévu un capteur de pression 42a dont la prise de pression est disposée dans le réseau d'extraction d'air individuel 16a. Ainsi, le capteur de pression 42a est adapté à mesurer la pression dans ce réseau d'extraction d'air individuel 16a. De préférence, la prise de pression 43a de ce capteur de pression 42a est disposée en amont du filtre à air 29a. Le capteur de pression 42a est ainsi adapté à mesurer la pression dans le réseau d'extraction d'air individuel 16a, en amont du filtre à air 29a. De la sorte, la régulation peut tenir compte de l'encrassement du filtre, l'encrassement du filtre 29a se traduisant par une diminution de la dépression en amont du filtre.

Selon une variante, plus simple, un ventilateur d'extraction d'air individuel présente une courbe de fonctionnement sensiblement croissante avec le débit (si l'on ne considère que les performances du ventilateur), de sorte que ce ventilateur présente une courbe de fonctionnement à pression sensiblement constante avec le débit si on inclut alors les pertes de charge dues au filtre. Ce type de ventilateur, ayant des courbes de fonctionnement programmées, est bien connu de l'homme du métier. La régulation de ce type de ventilateur est intrinsèque au moteur d'entraînement du ventilateur, via des paramètres comme l'intensité ou la vitesse de rotation du moteur. Ce type de ventilateur présente l'avantage qu'il ne nécessite pas de capteur de pression pour être régulé. Si ce type de ventilateur est mis en oeuvre, il est avantageux d'augmenter la consigne du ventilateur avec le temps, pour accroître la dépression fournie. Ceci permet en effet de compenser l'encrassement du filtre.

Il est à noter ici que, dans les installations connues comprenant un unique ventilateur commun, ce dernier ne permet pas de compenser l'état d'encrassement des différents filtres. Par conséquent, il est prévu dans ce type d'installation, que le ventilateur commun fournisse une pression supérieure à la pression réellement nécessaire dans l'installation, ceci afin de tenir compte de l'encrassement futur des filtres des chauffe-eau. Par conséquent, l'installation toute entière est en « surpression » (c'est-à-dire, en fait, en excès de dépression), à laquelle correspond une surconsommation électrique et généralement une gène acoustique. En outre, le ventilateur ne fournit pas uniquement une pression supérieure à ce qui est réellement nécessaire. Bien au contraire, le ventilateur fournit également un débit supérieur au débit réellement nécessaire dans l'installation. Il s'ensuit une augmentation des fuites d'air dans les logements. Il y a donc également une déperdition énergétique au niveau des logements.

La prise d'air 43a du capteur de pression 42a est également, de préférence, disposé en aval de toute bouche d'aspiration du réseau d'extraction d'air individuel 16a, ceci afin de mesurer la pression du débit total d'air extrait du logement.
Le capteur de pression 42a peut en particulier être un capteur de pression binaire (ou logique, par opposition à un capteur analogique ou numérique dont la sortie peut prendre différentes valeurs continues ou discrètes), c'est-à-dire de type tout ou rien, notamment un pressostat. Dans ce cas, le capteur est adapté pour que son signal de sortie soit modifié quand la pression devient supérieure ou inférieure à la pression nécessaire dans le réseau d'extraction d'air individuel pour assurer une extraction d'air satisfaisante du logement ou du local. En réponse à un changement de ce signal de sortie (classiquement, la dépression devient insuffisante pour assurer un débit d'air d'extraction satisfaisant), le ventilateur d'extraction d'air individuel est piloté pour augmenter la pression qu'il fournit, jusqu'à un nouveau changement du signal de sortie du capteur binaire, opposé au changement préalable du signal de sortie du capteur binaire. On maintient alors la commande du ventilateur d'extraction d'air individuel à ce niveau de pression ou à un niveau légèrement supérieur. Dans cette variante, la régulation peut alors être réalisée de telle manière que la pression au niveau de la prise de pression du capteur binaire demeure toujours entre les deux valeurs d'une plage d'hystérésis du changement d'état du capteur binaire de pression.

La prise de pression de ce capteur binaire est de préférence disposée au niveau de la bouche ou des bouches correspondant aux pertes de charge les plus élevées par rapport au ventilateur d'extraction d'air individuel associé.

L'utilisation d'un ventilateur d'extraction d'air individuel 18a régulé permet d'assurer un fonctionnement optimal du chauffe-eau 26a. En outre, pour deux logements dont les réseaux d'extraction d'air individuels débouchent dans le réseau d'extraction d'air commun à des points différents, correspondants à des pertes de charges différentes vis-à-vis du ventilateur d'extraction d'air commun 40, et présentant des bouches d'extraction identiques et ouvertes de manière identique, les débits d'air extrait sont identiques. Ceci n'est pas le cas avec une installation connue de l'art antérieur comprenant uniquement un ventilateur d'extraction d'air commun où les débits d'air extrait de chaque logement dépendent de la perte de charge associée à ce logement vis-à-vis du ventilateur d'extraction d'air commun. Ainsi, le ventilateur commun doit assurer une pression telle que la pression au niveau de la bouche d'extraction la plus défavorisée soit suffisante pour obtenir un débit de ventilation acceptable. Par conséquent, la pression au niveau d'autres bouches est supérieure à la pression effectivement nécessaire, ce qui se traduit par un débit d'air extrait supérieur au débit d'extraction effectivement nécessaire. Cette extraction au-delà du débit nécessaire augmente ainsi les déperditions de l'habitation collective et, par voie de conséquence, la consommation de chauffage induite.

Il est à noter ici que les ventilateurs d'extraction d'air individuels peuvent être dimensionnés pour assurer uniquement l'extraction de l'air depuis le logement ou le local associé jusqu'au débouché du réseau d'extraction d'air individuel associé, dans le réseau d'extraction d'air commun. En effet, la mise en mouvement de l'air dans le réseau de ventilation d'air commun est assurée par le ventilateur d'extraction d'air commun 40. Ceci présente un avantage par rapport aux installations connues de l'art antérieur dans lesquelles seuls des ventilateurs individuels sont mis en oeuvre. En effet, dans ces installations connues, il existe un risque de pollution d'un logement par l'air extrait d'un autre logement, notamment en cas de défaillance du ventilateur d'extraction d'air individuel. Cette pollution est empêchée avec un ventilateur d'extraction d'air commun qui assure l'extraction de l'air vicié hors du réseau d'extraction d'air commun.

Il est à noter ici que le ventilateur commun a pour fonction de mettre le réseau d'extraction d'air commun en dépression, ceci afin d'assurer l'écoulement de l'air extrait depuis le débouché des réseaux d'extraction d'air individuel jusqu'au débouché, à l'extérieur, du réseau d'extraction d'air commun. Cette dépression régnant dans le réseau d'extraction d'air commun peut être limitée. Le ventilateur d'extraction d'air commun fonctionne donc à très basse pression, notamment de l'ordre de 20 à 100 Pa, uniquement de manière à assurer une dépression le long du réseau commun. Par suite, le niveau sonore et la consommation énergétique de ce ventilateur d'extraction d'air commun restent modérés.

Le ventilateur d'extraction d'air commun peut également être régulé à pression constante ou croissante avec le débit, en fonction d'une pression mesurée au moyen d'un capteur de pression 44 mesurant une pression au niveau du ventilateur d'extraction d'air commun 40. Pour ce faire, la prise de pression 45 de ce capteur de pression 44 est disposée dans le réseau d'extraction d'air commun, à proximité du ventilateur d'extraction d'air commun 40, notamment, juste en amont de ce dernier, au niveau du débouché du caisson dans lequel est ménagé ce ventilateur d'extraction d'air commun.

Le capteur de pression 44 mesurant une pression au niveau du ventilateur d'extraction d'air commun 40 peut être un capteur du type binaire ou tout ou rien, notamment un pressostat. Dans ce cas, le capteur de pression 40 permet de détecter une anomalie de fonctionnement du ventilateur d'extraction d'air commun. En effet, une diminution de la pression détectée par ce capteur signifie que le ventilateur n'assure plus sa fonction. Dans ce cas, il est possible d'ordonner aux différents ventilateurs d'extraction d'air individuels de s'arrêter pour éviter tout risque de communication d'air vicié depuis un logement vers un autre.

De préférence, le ventilateur d'extraction d'air commun 40 est également régulé en fonction d'une pression mesurée par au moins un capteur de pression 46, 48 dont les prises de pression respectives 47, 49 sont disposées dans le réseau d'extraction d'air commun 34. La prise de pression 47, 49 de ce ou ces capteurs de pression 46, 48 sont de préférence disposées en un ou plusieurs points du réseau d'extraction d'air commun 34 correspondant à la plus grande ou aux plus grandes pertes de charge par rapport au ventilateur d'air commun 40. Ces points sont généralement ceux situés à plus grandes distances du ventilateur d'extraction d'air commun 34, comme cela est illustré à la figure 1.

Les capteurs de pression 46, 48 peuvent être du type binaire ou tout ou rien. Notamment les capteurs de pression 46, 48 peuvent être des pressostats. Dans ce cas, les capteurs de pression 46, 48 sont adaptés pour que leur signal de sortie soit modifié lorsque la pression passe au-dessus ou au-dessous d'une valeur de seuil prédéterminée comme étant satisfaisante. Typiquement la valeur de seuil prédéterminée est de l'ordre de 80 à 150 Pa, en fonction du type de régulation des ventilateurs d'extraction d'air individuels.. Au cours de l'utilisation de l'installation, un changement du signal de sortie d'un capteur (classiquement dû à une diminution de la pression), implique une augmentation de la pression fournie par le ventilateur d'extraction d'air commun jusqu'à ce que le signal de sortie du capteur reprenne sa valeur initiale.

On décrit ci-après de manière plus détaillée, la séquence des étapes de la régulation de l'installation. Dans le cas décrit, le pressostat fonctionne comme un contact ouvert quand la dépression qu'il mesure est inférieure à la valeur de seuil prédéterminée et comme un contact fermé quand la dépression qu'il mesure est supérieure à la valeur de seuil prédéterminée. La valeur de seuil prédéterminée peut être associée à des hystérésis pour éviter des changements constants du signal de sortie du capteur, lorsque la pression qu'il mesure oscille autour de la valeur de seuil prédéterminée. Cette hystérésis est souvent naturelle, de part la technologie du capteur binaire mis en oeuvre, à l'intérieur duquel le contact est formé généralement par une lame métallique liée à une membrane.

En cours de fonctionnement de l'installation, lorsqu'une pression inférieure à la valeur de seuil prédéterminée règne au niveau d'un pressostat, celui-ci se comporte comme un contact ouvert, c'est-à-dire que son signal de sortie est nul. Dans ce cas, la régulation du ventilateur d'extraction d'air commun commande une augmentation de la pression fournie par ce ventilateur d'extraction d'air commun, jusqu'à ce que le signal de sortie du pressostat ne soit plus nul, c'est-à-dire jusqu'à ce qu'il fonctionne de nouveau comme un contact fermé.

La régulation commande alors une légère diminution de la pression pour atteindre une pression correspondant à la valeur inférieure de l'hystérésis du capteur. Cette valeur inférieure devrait être ajustée pour être égale à la pression effectivement nécessaire dans l'installation. La régulation peut alors commander une temporisation, de par exemple 3 minutes, avant de tenir compte à nouveau du signal de sortie du pressostat. Si celui-ci est toujours différend de zéro, alors la régulation peut commander une nouvelle diminution de la pression fournie par le ventilateur d'extraction d'air commun. Si au contraire le signal de sortie est de nouveau nul, alors la régulation commande une nouvelle augmentation de la pression fournie par le ventilateur d'extraction d'air commun. La régulation se poursuit alors en répétant les étapes décrites.

L'utilisation de pressostats permet un câblage relativement simple des capteurs entre eux. Notamment, il est possible de câbler les pressostats en série, le signal reçu par une unité de commande commandant le ventilateur étant alors égal au « ET logique » des signaux de sortie des pressostats. En d'autres termes, comme les pressostats se comportent comme un contact ouvert quand la pression qu'ils mesurent est inférieure à la valeur de seuil prédéterminée, ce branchement en série permet de détecter tout passage d'une des pressions mesurées sous la valeur de seuil prédéterminée. Dans ce cas, en effet, le capteur associé se comporte comme un contact ouvert. Le signal de sortie de l'ensemble des capteurs reliés en série est donc nul. Ce signal permet ainsi de contrôler les variations de pression de tous les capteurs de pression.

Par ailleurs, il est à noter que la mise en place d'une installation telle que décrite ci-avant est facilitée et nettement plus précise que la mise en place d'une installation connue ne comprenant qu'un seul ventilateur d'extraction d'air commun. En effet, dans des installations à un seul ventilateur d'extraction d'air commun, il est nécessaire de régler ce ventilateur à un niveau de pression permettant d'assurer suffisamment de pression aux niveaux des bouches d'extraction les plus défavorisées, au sein des logements. Ceci est particulièrement délicat à réaliser sans faire des mesures dans de nombreux logements ou appartements potentiellement les plus défavorisés et déjà équipés de chauffe-eau et de réseaux d'extraction d'air. Ce réglage s'avère encore plus délicat lorsque l'habitation collective est habitée.

Au contraire, avec l'installation décrite en regard des figures, régulée à pression ajustée, la mise en place de l'installation se réduit à régler le niveau de pression des ventilateurs individuels d'extraction, pour chaque type d'appartement. Il n'a plus alors à revenir dans l'appartement. Si une anomalie apparaît ultérieurement, elle est traitée uniquement au niveau de l'appartement concerné sans déranger les occupants des autres appartements de l'habitation collective.

Bien entendu, il est possible de mettre en oeuvre plus de capteurs de pression, notamment, plusieurs capteurs de pression par branche, notamment si plusieurs points d'une même branche du réseau d'extraction d'air commun peuvent correspondre à la plus grande perte de charge (notamment en fonction du temps).

Par ailleurs, l'installation décrite ci-avant est une installation d'extraction d'air. Cette installation peut bien entendu être couplée à une installation d'insufflation d'air et former ainsi une installation collective de ventilation double flux.

En variante à ce qui a été décrit précédemment, l'installation décrite ci-avant peut être mise en oeuvre selon un procédé de mise en oeuvre comprenant les étapes de :
- mise en marche du ventilateur d'extraction d'air commun 40 ;
- détermination d'une dépression inférieure à une valeur de seuil prédéterminée dans un réseau d'extraction individuel 16a-16h ;
- mise en marche du ventilateur d'extraction d'air individuel 18a correspondant audit réseau d'extraction individuel 16a-16h pour assurer une dépression supérieure à la valeur de seuil prédéterminée.Ceci permet de limiter dans un premier temps la consommation énergétique de l'installation, ainsi que le bruit produit par l'installation qui peut être gênant pour les personnes habitant dans les différents logements.

En d'autres termes, dans un premier temps après le début de l'utilisation de l'installation ou après le changement de l'ensemble des filtres, seul le ventilateur d'extraction d'air commun fonctionne pour assurer l'extraction d'air depuis les différents logements.

Le ventilateur d'extraction d'air commun peut alors être réglé de manière que la dépression au niveau des bouches les plus défavorisées soit supérieure à une pression seuil prédéterminée, dite de fonctionnement, permettant d'assurer un fonctionnement correct de ces bouches les plus défavorisées. Il est à noter que durant ce premier temps, en effet, les filtres installés dans les chauffe-eau thermodynamiques sont neufs et donc propres, c'est-à-dire non colmatés. Les évaporateurs sont également non encrassés.

Le ventilateur d'extraction d'air commun peut même être réglé de manière à fournir une pression suffisante pour satisfaire le besoin dans la plupart des cas de demandes, au niveau des différents logements. En d'autres termes, le niveau de pression de ce ventilateur commun est alors défini pour pouvoir assurer les plus grands débits au niveau des différents logements. Ce niveau de pression est d'autant plus fort que dans le cas d'une installation de chauffe-eau sur air, l'air traverse successivement un filtre et un évaporateur qui sont des composants générateurs de perte de charge. Le niveau de pression de ce ventilateur commun est par conséquent relativement élevé, notamment de 260 Pa à plus de 300 Pa, ce qui produit dans chaque appartement un bruit à un niveau acoustique relativement élevé.

En variante, le ventilateur commun peut avoir pour seule fonction de mettre les réseaux d'extraction d'air commun et individuels en dépression pour assurer une extraction d'air « nominale » dans l'ensemble des logements. Par extraction d'air « nominale », on entend que la consigne de fonctionnement du ventilateur d'extraction d'air commun peut être choisie de telle manière que le ventilateur d'extraction d'air commun fournisse juste la pression nécessaire pour assurer l'extraction d'air depuis l'ensemble des logements, sur toute ou partie d'une plage de débit prédéterminée. La plage de débit prédéterminée peut notamment correspondre à la plage de bouches hygroréglables dont les logements sont munis. En particulier, le ventilateur d'extraction d'air commun 40 peut être dimensionné dans ce cas, pour assurer, au moins au moment où les filtres ne sont pas colmatés ou faiblement colmatés, l'extraction de débits moyens dans différents logements, c'est-à-dire par exemple sans prendre en compte le grand débit cuisine, sans que les ventilateurs individuels ne soient en fonctionnement. Ainsi, le niveau de pression du ventilateur commun est moindre, ce qui réduit la consommation énergétique et le bruit produit par ce ventilateur commun.

Cependant, après un certain temps d'utilisation de l'installation, qui correspond en pratique à quelques semaines ou quelques mois, les filtres et/ou les évaporateurs s'encrassent, augmentant ainsi les pertes de charges au niveau de ces filtres et de ces évaporateurs. Ces pertes de charge peuvent être telles que la dépression en amont de ces filtres, et notamment au niveau des bouches les plus défavorisées, n'est pas suffisante pour assurer un fonctionnement correct des bouches. En d'autres termes, pour une même configuration d'ouverture des bouches de l'installation, la dépression en amont des filtres est plus faible. Par suite, l'extraction d'air depuis les logements ne peut plus être assurée de manière satisfaisante.

Les ventilateurs d'extraction d'air individuels associés aux réseaux d'extraction individuels dans lesquels la pression mesurée est inférieure à une valeur de seuil prédéterminée de déclenchement sont alors mis en marche. Les ventilateurs d'extraction individuels sont alors régulés pour assurer que la dépression au niveau des bouches les plus défavorisées atteigne ou dépasse une valeur de seuil prédéterminée de fonctionnement de la bouche. Cette dernière valeur de seuil de fonctionnement n'est pas forcément égale à la valeur de seuil de déclenchement en dessous de laquelle les ventilateurs d'extraction d'air individuels sont mis en marche. En outre, il est à noter que la valeur de seuil de déclenchement peut éventuellement varier d'un réseau individuel à l'autre. En outre, la pression est de préférence mesurée, dans chacun des réseaux d'extraction d'air individuels, en amont des filtres et des évaporateurs.

Cette mise en marche des ventilateurs d'extraction individuels peut être réalisée dès que la (dé)pression mesurée devient inférieure à la valeur de seuil de déclenchement. Il est cependant préférable que cette mise en marche soit réalisée après qu'une moyenne glissante, sur un intervalle de temps prédéterminé (par exemple 2 min), de la dépression soit devenue inférieure à la valeur de seuil de déclenchement. Selon une autre variante, il faut que la dépression mesurée ou sa moyenne glissante reste inférieure à la valeur de seuil de déclenchement durant un intervalle de temps prédéterminé pour que les ventilateurs d'extraction d'air individuels soient mis en marche.

Après démarrage, et pour ajuster la consommation énergétique au plus juste, les ventilateurs d'extractions d'air individuels peuvent être régulés :
- en pression constante, notamment sur la base du capteur ayant permis de détecter que la dépression était devenue inférieure à la valeur de seuil prédéterminée ; dans ce cas, l'encrassement du filtre sera pris en compte et compensé dès lors que le ventilateur individuel aura démarré ; la consigne de régulation à pression constante est donc considérée égale ou supérieure à la dite valeur de seuil de déclenchement.
- en pression croissante avec le débit, notamment sur la base du capteur de pression ayant permis de détecter que la dépression était devenue inférieure à la valeur de seuil prédéterminée et sur la base d'une estimation ou d'une mesure de débit du réseau individuel concerné ;
- en pression ajustée au besoin, le besoin étant déterminé sur la base d'un ou plusieurs pressostats captant la pression juste en amont de quelques bouches dont celle la plus défavorisée ; ou
- en fonction d'une consigne de vitesse croissante avec le temps, pour compenser l'encrassement croissant des filtres.

Lorsqu'un ventilateur d'extraction d'air individuel est régulé à pression constante, il peut arriver que sa simple mise en route fasse que la pression dans le réseau dépasse très largement la consigne. Dans ce cas, on pourra s'attacher à piloter le ventilateur commun à un niveau de puissance minimal.

Les ventilateurs d'extraction d'air individuels peuvent également être pilotés en tout ou rien. Un capteur de pression du type pressostat peut piloter l'enclenchement du ventilateur individuel.

Le procédé permet ainsi une meilleure gestion de l'encrassement et du colmatage des filtres. Ainsi, même si les filtres s'encrassent, le débit est assuré jusqu'à ce qu'un ventilateur d'extraction d'air individuel ait atteint sa puissance de fonctionnement maximale acceptable. Au contraire, dans les installations connues, l'encrassement des filtres se traduit par une diminution des débits et donc, dans le cas d'un chauffe-eau sur air extrait, à une diminution de la quantité d'eau chaude sanitaire ou à un allongement de la production de cette eau chaude sanitaire.

Le procédé de mise en oeuvre de l'installation gère ainsi la mise en route du ventilateur individuel pour compenser un manque de pression, c'est-à-dire par exemple un colmatage de filtre comme il a été largement abordé. Cependant, ce procédé de mise en oeuvre de l'installation permet également de répondre à une demande ponctuelle de débit supplémentaire, par exemple suite à une douche - et donc l'ouverture d'une bouche suite à une variation d'hygrométrie - ou encore la demande d'un grand débit cuisine.

Il est encore à noter ici que le procédé permet également une gestion au cas par cas de chacun des logements. Si un logement présente un encrassement des filtres plus élevé qu'un autre, le ventilateur d'extraction d'air individuel associé fonctionnera à une puissance plus élevée pour assurer un débit d'air satisfaisant et, par la même, assurer la production d'une quantité satisfaisante d'eau chaude sanitaire.

Lorsque un ventilateur individuel a été mis marche, différents paramètres peuvent être analysés comme le niveau de pression, le niveau de puissance de commande du ventilateur individuel ou encore le temps depuis lequel ce ventilateur d'extraction d'air individuel a été mis en route, pour ensuite gérer l'éventuel arrêt du ventilateur d'extraction d'air individuel. Par exemple, lorsque le niveau de pression mesuré est supérieur à une valeur de déclenchement et/ou que le niveau de puissance du ventilateur individuel est à son minimum, l'arrêt du ventilateur individuel peut être commandé.

Lorsque le ventilateur d'extraction d'air individuel a été mis en marche, selon le type de régulation du ventilateur individuel, la régulation de ce dernier permet de réguler la pression en amont du filtre selon une consigne prédéterminée. Lorsque la pression en amont du filtre augmente de nouveau, du fait par exemple de la fermeture de bouches, la vitesse du ventilateur d'extraction d'air individuel diminue. Cette diminution de la vitesse du ventilateur d'extraction d'air individuel se poursuit :
- jusqu'à l'arrêt total du ventilateur si celui-ci est mis en marche depuis un intervalle de temps prédéterminé (par exemple 15 min) ;
- jusqu'à atteindre un niveau de fonctionnement minimal (par exemple 10 % de sa puissance) dans le cas contraire.

Par ailleurs, la mise en marche du ventilateur individuel permet de déterminer le colmatage du filtre. L'affichage d'un défaut, notamment du colmatage du filtre, peut ainsi être géré en fonction :
- du temps depuis lequel le ventilo individuel a été mis en route (par exemple plus de 5 mois que le ventilateur individuel fonctionne en continu) et/ou,
- du niveau de puissance de fonctionnement du ventilateur individuel (quand celui-ci fonctionne à une puissance supérieure à un pourcentage (par exemple 60 %) de sa puissance maximale).

L'affichage de ce défaut permet d'indiquer à un utilisateur la nécessité de remplacer un filtre pour éviter une défaillance de l'installation.

## Revendications

1. Installation de production d'eau chaude sanitaire (10) pour une habitation collective (12) comprenant une pluralité de logements individuels (14a-14h), l'installation comportant :
- un réseau d'extraction individuel (16a-16h) associé à chacun des logements individuels (14a-14h),
- un réseau d'extraction d'air commun (34) aux différents logements individuels (14a-14h), dans lequel débouchent les réseaux d'extraction individuels (16a-16h), en aval des chauffe-eau (26a-26h), le réseau d'extraction d'air commun (34) étant muni d'un ventilateur d'extraction d'air commun (40), **caractérisé en ce que** chaque réseau d'extraction individuel (16a-16h) est muni d'un ventilateur d'extraction individuel (18a) pour extraire de l'air depuis le logement individuel (14a-14h) associé et pour amener l'air extrait dans des moyens d'échange de chaleur avec de l'eau à chauffer contenu dans un réservoir de stockage (32a) d'un chauffe-eau (26a) disposé dans le logement individuel (14a-14h).

2. Installation selon la revendication 1, dans laquelle les moyens d'échange de chaleur comprennent un circuit de fluide frigorigène entre un évaporateur (28a), où l'air extrait d'un logement individuel (14a-14h) échange de la chaleur avec le fluide frigorigène, et un condenseur où le fluide frigorigène échange de la chaleur avec l'eau à chauffer.

3. Installation selon la revendication 2, dans laquelle les moyens d'échange de chaleur comprennent également un compresseur (30a) en aval de l'évaporateur (28a) et en amont du condenseur et un détendeur en aval du condenseur et en amont de l'évaporateur (28a).

4. Installation selon la revendication 2 ou 3, dans laquelle le condenseur est dans le réservoir de stockage (32a) ou en contact avec une paroi externe du réservoir de stockage (32a).

5. Installation selon l'une quelconque des revendications précédentes, dans laquelle les ventilateurs d'extraction d'air individuels (18a) fonctionnent à pression sensiblement constante ou à pression croissante avec le débit d'air.

6. Installation selon l'une quelconque des revendications 1 à 5 en combinaison avec la revendication 2, comprenant au moins un capteur de pression (42a) adapté à mesurer la pression dans un réseau d'extraction individuel (16a-16h), le ventilateur d'extraction d'air individuel (18a-18h) associé au réseau d'extraction individuel (16a-16h) étant régulé en fonction de la pression mesurée par le capteur de pression (42a), le capteur de pression (42a) étant de préférence adapté à mesurer la pression en amont d'un filtre (29a) prévu pour empêcher l'encrassement de l'évaporateur (28a) et en aval de toute bouche d'aspiration du réseau d'extraction individuel (16a-16h).

7. Installation selon l'une quelconque des revendications 1 à 5 en combinaison avec la revendication 2, dans laquelle au moins un ventilateur d'extraction d'air individuel (18a-18h) est régulé selon une loi de régulation prédéfinie permettant d'obtenir une pression fournie par le ventilateur sensiblement constante, la consigne du ventilateur étant augmentée avec le temps pour augmenter la pression fournie par le ventilateur.

8. Installation selon l'une quelconque des revendications précédentes, dans laquelle le ventilateur d'extraction d'air commun (40) est régulé à pression constante ou croissante avec le débit, en fonction de la pression au niveau du ventilateur commun.

9. Installation selon l'une quelconque des revendications précédentes, dans laquelle le ventilateur d'extraction d'air commun (40) est régulé en fonction d'une pression mesurée dans le réseau d'extraction d'air commun (34), de préférence au point du réseau d'extraction d'air commun (34) correspondant à la plus grande perte de charge par rapport au ventilateur d'air commun (40).

10. Installation selon la revendication 9, dans laquelle la pression mesurée dans le réseau d'extraction d'air commun est mesurée au moyen d'un capteur de pression (46 ; 48) binaire, notamment un pressostat, dont la prise de pression (47 ; 49) est disposée dans le réseau d'extraction d'air commun (34).

11. Installation selon la revendication 10, dans laquelle le ventilateur d'extraction d'air commun (40) est régulé en fonction du signal de sortie d'une pluralité de capteurs binaires de pression (46 ; 48) câblés en série les uns avec les autres.

12. Procédé de mise en oeuvre d'une installation selon l'une quelconque des revendications précédentes, comprenant les étapes de :
- mise en marche du ventilateur d'extraction d'air commun (40) ;
- détermination d'une dépression inférieure à une valeur de seuil prédéterminée dans un réseau d'extraction individuel (16a-16h) ;
- mise en marche du ventilateur d'extraction d'air individuel (18a) correspondant audit réseau d'extraction individuel (16a-16h) pour assurer une dépression supérieure à la valeur de seuil prédéterminée.

13. Procédé de mise en oeuvre selon la revendication 12 en combinaison avec la revendication 6, dans lequel la détermination de la dépression est réalisée au moyen dudit capteur de pression (42a).

14. Procédé de mise en oeuvre selon la revendication 12 ou 13, dans laquelle un défaut de l'installation, notamment un colmatage d'un filtre de l'installation, est déterminé lorsque :
- le ventilateur d'extraction d'air individuel (18a) fonctionne en continu depuis un temps supérieur à une valeur de seuil prédéterminée, et/ou
- le ventilateur d'extraction d'air individuel (18a) fonctionne à un niveau de puissance supérieur à une valeur de seuil prédéterminée.

## Patentansprüche

1. Anlage zur Erzeugung von sanitärem Warmwasser (10) für ein Mehrfamilienhaus (12), das eine Vielzahl einzelner Wohnungen (14a-14h) umfasst, wobei die Anlage aufweist:
- ein individuelles Entnahmenetz (16a-16h), das jeder der einzelnen Wohnungen (14a-14h) zugeordnet ist,
- ein Luftentnahmenetz (34), das den verschiedenen einzelnen Wohnungen (14a-14h) gemeinsam ist, in welches die individuellen Entnahmenetze (16a-16h) nach den Wassererhitzern (26a-26h) münden, wobei das gemeinsame Luftentnahmenetz (34) mit einem gemeinsamen Luftentnahmelüfter (40) ausgestattet ist, **dadurch gekennzeichnet, dass** jedes individuelle Entnahmenetz (16a-16h) mit einem individuellen Entnahmelüfter (18a) ausgestattet ist, um Luft aus der zugeordneten einzelnen Wohnung (14a-14h) zu entnehmen und um die entnommene Luft in Wärmetauschermittel mit dem zu erhitzenden Wasser zu führen, das in einem Lagerbehälter (32a) eines Wassererhitzers (26a) vorhanden ist, der in der einzelnen Wohnung (14a-14h) angeordnet ist.

2. Anlage nach Anspruch 1, wobei die Wärmetauschermittel einen Kühlmittelkreis zwischen einem Verdampfer (28a), wo die einer einzelnen Wohnung (14a-14h) entnommene Luft mit dem Kühlmittel Wärme austauscht, und einem Kondensator, wo das Kühlmittel Wärme mit dem zu erhitzenden Wasser austauscht, umfassen.

3. Anlage nach Anspruch 2, wobei die Wärmetauschermittel ebenfalls einen Kompressor (30a) nach dem Verdampfer (28a) und vor dem Kondensator und einen Druckminderer nach dem Kondensator und vor dem Verdampfer (28a) umfassen.

4. Anlage nach Anspruch 2 oder 3, wobei der Kondensator in dem Lagerbehälter (32a) oder im Kontakt mit einer Außenwand des Lagerbehälters (32a) ist.

5. Anlage nach einem der vorangehenden Ansprüche, wobei die individuellen Luftentnahmelüfter (18a) mit etwa konstantem oder mit steigendem Druck mit dem Luftdurchsatz arbeiten.

6. Anlage nach einem der Ansprüche 1 bis 5 in Kombination mit Anspruch 2, umfassend mindestens einen Drucksensor (42a), der imstande ist, den Druck in einem individuellen Entnahmenetz (16a-16h) zu messen, wobei der dem individuellen Entnahmenetz (16a-16h) zugeordnete individuelle Luftentnahmelüfter (18a-18h) in Abhängigkeit von dem vom Drucksensor (42a) gemessenen Druck eingestellt ist, wobei der Drucksensor (42a) vorzugsweise angepasst ist, den Druck vor einem Filter (29a) zu messen, der vorgesehen ist, die Verschmutzung des Verdampfers (28a) zu verhindern, und nach allen Ansaugöffnungen des individuellen Entnahmenetzes (16a-16h).

7. Anlage nach einem der Ansprüche 1 bis 5 in Kombination mit Anspruch 2, wobei mindestens ein individueller Luftentnahmelüfter (18a-18h) gemäß einem vorbestimmten Regulationsgesetz geregelt ist, das erlaubt, einen etwa konstanten Druck zu erhalten, der von dem Lüfter bereitgestellt wird, wobei der Einstellwert des Lüfters mit der Zeit erhöht wird, um den von dem Lüfter bereitgestellten Druck zu erhöhen.

8. Anlage nach einem der vorangehenden Ansprüche, wobei der gemeinsame Luftentnahmelüfter (40) in Abhängigkeit von dem Druck im Bereich des gemeinsamen Lüfters auf konstanten oder mit dem Durchsatz steigenden Druck eingestellt ist.

9. Anlage nach einem der vorangehenden Ansprüche, wobei der gemeinsame Luftentnahmelüfter (40) in Abhängigkeit von einem Druck eingestellt ist, der in dem gemeinsamen Luftentnahmenetz (34) gemessen wird, vorzugsweise an dem Punkt des gemeinsamen Luftentnahmenetzes (34), der dem größten Lastverlust im Verhältnis zum gemeinsamen Luftlüfter (40) entspricht.

10. Anlage nach Anspruch 9, wobei der in dem gemeinsamen Luftentnahmenetz gemessene Druck mit einem binären Drucksensor (46; 48) gemessen wird, insbesondere mit einem Druckregler, wobei die Druckanschlussstelle (47; 49) in dem gemeinsamen Luftentnahmenetz (34) angeordnet ist.

11. Anlage nach Anspruch 10, wobei der gemeinsame Luftentnahmelüfter (40) in Abhängigkeit von dem Ausgangssignal einer Vielzahl binärer Drucksensoren (46; 48), die zueinander in Reihe verkabelt sind, eingestellt wird.

12. Verfahren für die Umsetzung einer Anlage nach einem der vorangehenden Ansprüche, das die folgenden Schritte umfasst:
- Einschalten des gemeinsamen Luftentnahmelüfters (40),
- Bestimmen eines Unterdrucks unter einem vorbestimmten Grenzwert in einem individuellen Entnahmenetz (16a-16h),
- Einschalten des individuellen Luftentnahmelüfters (18a), der dem individuellen Entnahmenetz (16a-16h) entspricht, um einen Unterdruck über dem vorbestimmten Grenzwert zu sichern.

13. Umsetzungsverfahren nach Anspruch 12 in Kombination mit Anspruch 6, wobei die Bestimmung des Unterdrucks mit Hilfe des Drucksensors (42a) durchgeführt wird.

14. Umsetzungsverfahren nach Anspruch 12 oder 13, wobei ein Fehler der Anlage, insbesondere eine Verstopfung eines Filters der Anlage, festgestellt wird, wenn:
- der individuelle Luftentnahmelüfter (18a) eine Zeit über einem vorbestimmten Grenzwert kontinuierlich läuft, und/oder
- der individuelle Luftentnahmelüfter (18a) mit einem Leistungsniveau über einem vorbestimmten Grenzwert läuft.

## Claims

1. A facility for producing sanitary hot water (10) for congregate housing (12) comprising a plurality of individual dwelling units (14a-14h), the facility including:
- an individual extraction network (16a-16h) associated with each of the individual dwelling units (14a-14h),
- an air extraction network (34) shared by the different individual dwelling units (14a-14h), in which the individual extraction networks (16a-16h) emerge, downstream from the water heaters (26a, 26h), the shared air extraction network (34) being provided with a shared air extraction fan (40), **characterized in that** each individual extraction network (16a-16h) is provided with an individual extraction fan (18a) to extract air from the associated individual dwelling unit (14a-14h) and to bring the extracted air into heat exchange means with the water to be heated contained in a storage reservoir (32a) of a water heater (26a) positioned in the individual dwelling unit (14a-14h).

2. The facility according to claim 1, wherein the heat exchange means comprise a refrigerant circuit between an evaporator (28a), where the air extracted from an individual dwelling unit (14a-14h) exchanges heat with the refrigerant, and a condenser, where the refrigerant exchanges heat with the water to be heated.

3. The facility according to claim 2, wherein the heat exchange means also comprise a compressor (30a) downstream from the evaporator (28a) and upstream from the condenser and an expander downstream from the condenser and upstream from the evaporator (28a).

4. The facility according to claim 2 or 3, wherein the condenser is in the storage reservoir (32a) or in contact with an outer wall of the storage reservoir (32a).

5. The facility according to any one of the preceding claims, wherein the individual air extraction fans (18a) operate at a substantially constant pressure or at a pressure increasing with the air flow rate.

6. The facility according to any one of claims 1 to 5 combined with claim 2, comprising at least one pressure sensor (42a) suitable for measuring the pressure in an individual extraction network (16a-16h), the individual air extraction fan (18a-18h) associated with the individual extraction network (16a-16h) being regulated as a function of the pressure measured by the pressure sensor (42a), the pressure sensor (42a) preferably being suitable for measuring the pressure upstream from a filter (29a) provided to prevent dirtying of the evaporator (28a) and downstream of any suction mouth of the individual extraction network (16a-16h).

7. The facility according to any one of claims 1 to 5 combined with claim 2, wherein at least one individual air extraction fan (18a-18h) is regulated according to a predefined regulation law making it possible to obtain a substantially constant pressure supplied by the fan, the setpoint of the fan being increased with time to increase the pressure supplied by the fan.

8. The facility according to any one of the preceding claims, wherein the shared air extraction fan (40) is regulated at a constant pressure or a pressure increasing with the flow rate, as a function of the pressure at the shared fan.

9. The facility according to any one of the preceding claims, wherein the shared air extraction fan (40) is regulated as a function of a pressure measured in the shared air extraction network (34), preferably at the point of the shared air extraction network (34) corresponding to the greatest pressure loss relative to the shared air fan (40).

10. The facility according to claim 9, wherein the pressure measured in the shared air extraction network is measured using a binary pressure sensor (46; 48), in particular a pressure switch, the pressure tap (47; 49) of which is positioned in the shared air extraction network (34).

11. The facility according to claim 10, wherein the shared air extraction fan (40) is regulated based on the output signal from a plurality of binary pressure sensors (46; 48) cabled in series with one another.

12. A method for implementing a facility according to any one of the preceding claims, comprising the following steps:
- starting the shared air extraction fan (40);
- determining a vacuum below a predetermined threshold value in an individual extraction network (16a-16h);
- starting the individual air extraction fan (18a) corresponding to said individual extraction network (16a-16h) to provide a vacuum above the predetermined threshold value.

13. The implementation method according to claim 12 combined with claim 6, wherein the determination of the vacuum is done using said pressure sensor (42a).

14. The implementation method according to claim 12 or 13, wherein a defect of the facility, in particular clogging of a filter of the facility, is determined when:
- the individual air extraction fan (18a) is operating continuously for a length of time exceeding a predetermined threshold value, and/or
- the individual air extraction fan (18a) is operating at a power level above a predetermined threshold value.
